# EUROPEAN PATENT APPLICATION

(11) **EP 4 661 490 A1**
(43) Date of publication of application: **10.12.2025**
(21) Application number: 24753637.8
(22) Date of filing: 07.02.2024
(51) Int. Cl.: H04W 28/10, H04W 40/24, H04W 76/10, H04L 41/0803, H04W 92/02, H04W 56/00, H04W 88/18

(54) **METHOD AND DEVICE FOR SUPPORTING WIRELESS COMMUNICATION SERVICE**

(30) Priority: 09.02.2023 KR 20230017278
(71) Applicant: Samsung Electronics Co., Ltd., Suwon-si, Gyeonggi-do 16677 (KR)
(72) Inventor: MOON, Sangjun, Suwon-si Gyeonggi-do 16677 (KR)
(74) Representative: Nederlandsch Octrooibureau
(86) International application number: PCT/KR2024/001835
(87) International publication number: WO 2024/167315

(57) **Abstract**

The present disclosure relates to a 5G or 6G communication system for supporting higher data transmission rates. A method performed by a time sensitive communications and time synchronization function (TSCTSF) entity in a wireless communication system may comprise receiving internet protocol (IP) information on a user equipment (UE) from a session management function (SMF) entity, receiving IP information on a user plane function (UPF) entity from the UPF entity, receiving, from a deterministic networking (DetNet) controller, end-to-end (E2E) routing-related information for routing of a fifth generation system (5GS) including the TSCTSF entity, and identifying information on a parameter for the routing of the 5GS on the basis of the E2E routing-related information, wherein the routing of the 5GS may be based on the IP information on the UE and the IP information on the UPF entity.

## Description

### [Technical Field]

The disclosure relates to a wireless communication system and, more particularly, to a method and a device for supporting a wireless communication service in a wireless communication system.

### [Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Disclosure of Invention]

### [Technical Problem]

Provided according to an embodiment of the disclosure is a device and a method capable of effectively providing services in a mobile communication system.

### [Solution to Problem]

According to an embodiment, a method performed by a time-sensitive communication and time synchronization function (TSCTSF) entity in a wireless communication system may include receiving internet protocol (IP) information on a user equipment (UE) from a session management function (SMF) entity, receiving IP information on a user plane function (UPF) entity from the UPF entity, receiving, from a deterministic network (DetNet) controller, end-to-end (E2E) routing-related information for routing of a fifth-generation system (5GS) including the TSCTSF entity, and identifying information on a parameter for the routing of the 5GS, based on the E2E routing-related information, wherein the routing of the 5GS may be based on the IP information on the UE and the IP information on the UPF entity.

According to an embodiment, a time-sensitive communication and time synchronization function (TSCTSF) entity in a wireless communication system may include a transceiver and a controller coupled with the transceiver, wherein the controller may be configured to: receive internet protocol (IP) information on a user equipment (UE) from a session management function (SMF) entity; receive IP information on a user plane function (UPF) entity from the UPF entity; receive, from a deterministic network (DetNet) controller, end-to-end (E2E) routing-related information for routing of a fifth-generation system (5GS) including the TSCTSF entity; and identify information on a parameter for the routing of the 5GS, based on the E2E routing-related information, and the routing of the 5GS may be based on the IP information on the UE and the IP information on the UPF entity.

### [Advantageous Effects of Invention]

According to an embodiment of the disclosure, a device and a method capable of effectively providing services in a wireless communication system can be provided.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 illustrates information flow when a 5GS interworks with a TSN, based on Ethernet according to an embodiment.
FIG. 2 illustrates information flow when a 5GS interworks with a DetNet, based on an IP network according to an embodiment.
FIG. 3 illustrates the operation of a DetNet providing E2E routing information and a 5GS providing routing information to a UE and a UPF according to an embodiment.
FIG. 4 illustrates a method for a TSCTSF of a 5GS to derive E2E routing information of a DetNet as routing information for the 5GS according to an embodiment.
FIG. 5 illustrates a method for a SMF of a DetNet to transmit routing information of a UE to a TSCTSF and a method for deriving and utilizing routing information for a 5GS from E2E routing information when the 5GS interworks with the DetNet according to an embodiment.
FIG. 6 illustrates a method for a UPF of a DetNet to transmit routing information of a UE to a TSCTSF and a method for deriving and utilizing routing information for a 5GS from E2E routing information when the 5GS interworks with the DetNet.
FIG. 7 illustrates an exemplary structure of a base station according to an embodiment of the disclosure.
FIG. 8 illustrates an exemplary structure of a UE according to an embodiment of the disclosure.
FIG. 9 illustrates an exemplary structure of a core network entity according to an embodiment of the disclosure.

### [Mode for the Invention]

Hereinafter, the operation principle of the disclosure will be described in detail in conjunction with the accompanying drawings. In describing the disclosure below, a detailed description of known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as used herein, and other terms referring to subjects having equivalent technical meanings may be used.

In the following description of the disclosure, terms and names defined in 5GS and NR standards, which are the standards specified by the 3rd generation partnership project (3GPP) group among the existing communication standards, will be used for the sake of descriptive convenience. However, the disclosure is not limited by these terms and names, and may be applied in the same way to systems that conform other standards. For example, the disclosure may be applied to the 3GPP 5GS/NR (5th generation mobile communication standards).

The disclosure relates to a method for providing a latency-guaranteed service with a wireless communication network, specifically, a 3GPP 5G system (5GS). In particular, the disclosure relates to interworking of an Internet protocol (IP)-based wide-area deterministic networking (DetNet) technology with a 3GPP 5GS to overcome spatial limitations of a time-sensitive networking (TSN) technology.

When a 3GPP network (5GS) interworks with the IP-based wide-area deterministic networking (DetNet) technology to provide a latency-guaranteed service, DetNet provides end-to-end (E2E) routing information, but the 3GPP 5GS provides only routing information of a UE and a UPF, and thus the routing information of DetNet needs to be converted into routing information corresponding to the 3GPP 5GS.

When the 3GPP network (5GS) interworks with the IP-based wide-area deterministic networking (DetNet) technology to provide a latency-guaranteed service, the 3GPP 5GS receives the end-to-end (E2E) routing information provided by DetNet and converts the E2E routing information into routing information of a UE and a UPF, thereby providing a function required by the 5GS.

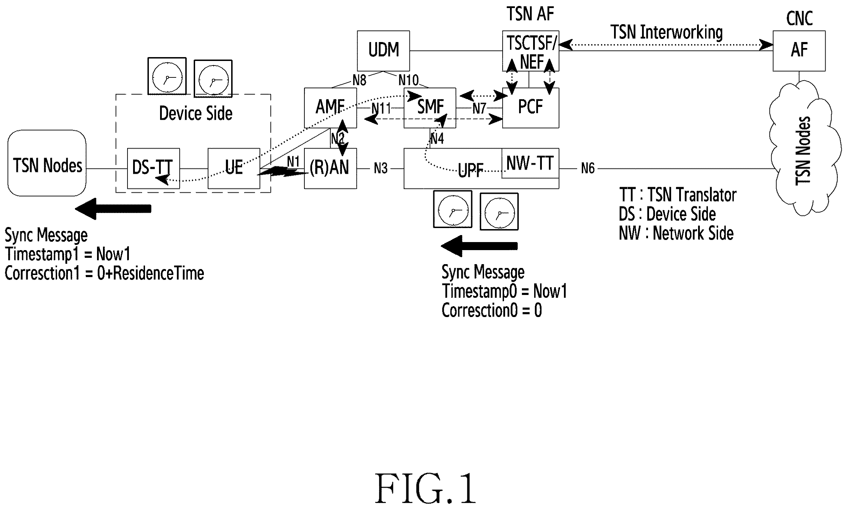

FIG. 1 illustrates information flow when a fifth-generation service (5GS) interworks with a TSN, based on Ethernet according to an embodiment.

Referring to FIG. 1, a centralized network configuration (CNC) server according to an embodiment transmits a requirement of the TSN to a TSN application function (TSNAF) of the 5GS, and the TSNAF configures information required for a device-side TSN translator (DS-TT) and a network-side TSN translator (NW-TT), based on or in accordance with the transmitted requirement. For example, the requirement of the TSN may include time synchronization and/or time-sensitive communication.

According to an embodiment, the TSNAF may collect or receive information on the 5GS from each of the DS-TT and the NW-TT, and may transmit the collected or received information on the 5GS to a CNC (or CNC server). For example, when the 5GS provides time synchronization to a UE, the TSNAF may configure the NW-TT and the DS-TT based on information provided by the CNC (or CNC server) to convert and transmit a sync message provided from the outside based on 5GS-internal time. For example, when transmitting a sync message from the 5GS to the outside based on the information provided by the CNC (or CNC server), the TSNAF may convert the sync message, based on an external TSN node.

According to an embodiment, when interworking with a general AF instead of the CNC, the 5GS may use a time-sensitive communications and time synchronization function (TSCTSF) instead of the TSNAF to receive a requirement from the AF, and may configure the DS-TT and the NW-TT according to the received requirement. In an embodiment, the TSCTSF may collect or receive the information on the 5GS from the DS-TT and the NW-TT, and may transmit the information to the AF. A network exposure function (NEF) may be required in parallel with the TSCTSF depending on whether the AF belongs to the 3GPP. For example, based on whether the AF is included in the 3GPP, the TSCTSF and/or the NEF may interwork with the AF. For example, based on whether the AF is included in the 3GPP, the AF may interwork with the TSCTSF (AF-TSCTSF interworking), or the AF may interwork with the NEF and the TSCTSF (AF-NEF-TSCTSF interworking).

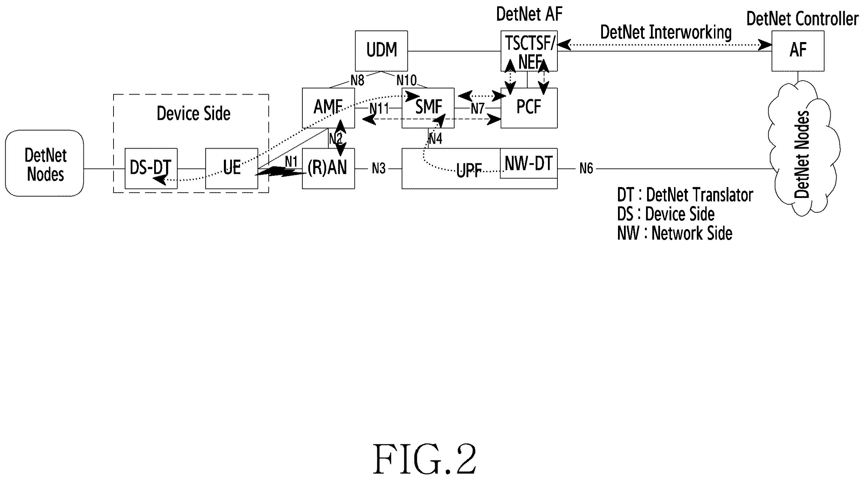

FIG. 2 illustrates information flow when a 5GS interworks with a DetNet, based on an IP network according to an embodiment.

Referring to FIG. 2, according to an embodiment, similarly to the CNC (or CNC server) when the 5GS interworks with the TSN, a DetNet controller may transmit a requirement of the DetNet to a DetNetAF or a TSCTSF/NEF of the 5GS when the 5GS interworks with the IP network. The DetNetAF or the TSCTSF/NEF configures information required for a device-side DetNet translator (DS-DT) and a network-side DetNet translator (NW-DT) according to the transmitted requirement. In an embodiment, the DetNetAF or the TSCTSF/NEF may collect, obtain, or receive information on the 5GS from the DS-DT and the NW-DT, and may transmit the information to the DetNet controller.

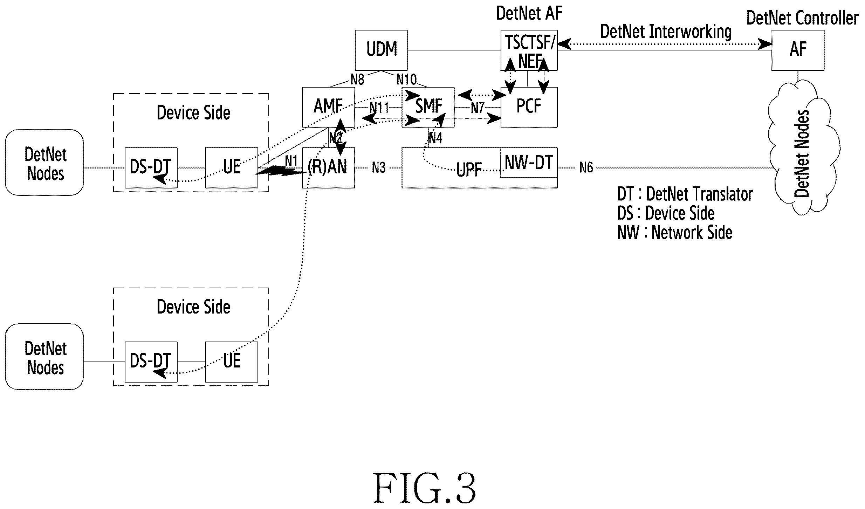

FIG. 3 illustrates the operation of a DetNet providing E2E routing information and a 5GS providing routing information to a UE and a UPF according to an embodiment.

Referring to FIG. 3, the CNC of the TSN of FIG. 1 according to an embodiment is based on Ethernet, and may thus derive or identify and provide a per-link requirement to the 5GS. For example, the per-link requirement may include a link delay and/or a scheduling time.

However, a DetNet controller of the DetNet may provide E2E routing information to the 5GS. The 5GS may manage only routing information of a user equipment (UE) and a user plane function (UPF). Therefore, when the DetNet and the 5GS interwork, the E2E routing information of the DetNet may need to be converted into the routing information of the UE and the UPF of the 5GS.

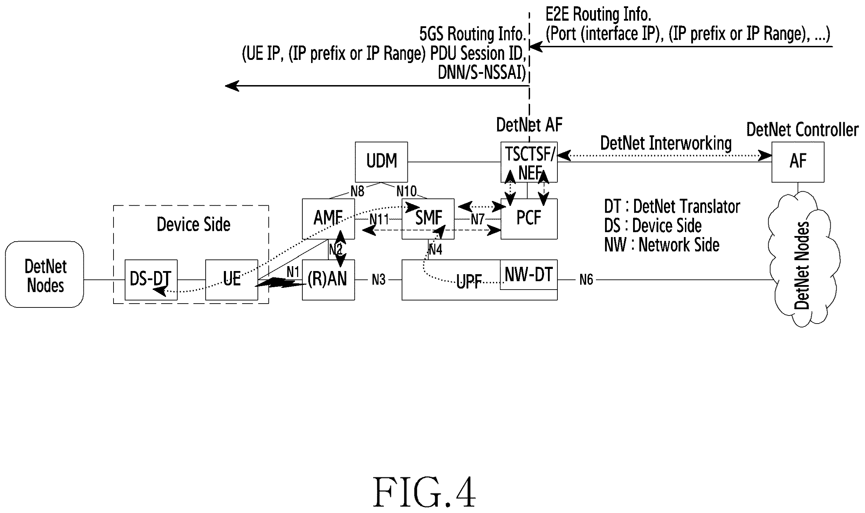

FIG. 4 illustrates a method for a TSCTSF of a 5GS to derive E2E routing information of a DetNet as routing information for the 5GS according to an embodiment.

Referring to FIG. 4, for example, when a DetNet controller provides E2E routing information (e.g., a port (interface IP) or (IP address (range) or IP prefix)) to the 5GS, a DetNetAF or TSCTSF/NEF of the 5GS may derive, identify, or obtain routing information (e.g., a protocol data unit (PDU) session ID(s), a data network name (DNN)/single network slice selection assistance information (S-NSSAI), a UPF port IP address, an IP range/prefix behind the port, a UE IP address, a PDU session ID(s), or an IP range and/or prefix behind the UE) about the UE and a UPF, based on the provided E2E routing information. A method for deriving or obtaining the routing information of the UE and the UPF based on the provided E2E routing information is as follows.
1. The DetNet controller may transmit the E2E routing information (e.g., the port (interface IP) or (IP address (range) or IP prefix)) to the 5GS.
2. The DetNet AF or TSCTSF/NEF of the 5GS may convert the received or transmitted E2E routing information into the routing information of the UE and UPF for the 5GS.
   A. The TSCTSF may select a PDU session. The TSCTSF may select or determine a PDU session ID(s), based on the DNN/S-NSSAI, the UPF port IP address, and/or the IP range/prefix behind the port. In another example, the TSCTSF may select or determine a PDU session ID(s), based on the UE IP address, the IP range, and/or the prefix behind the UE.
   B. The TSCTSF may compare the E2E routing information with the 5GS routing information, and may notify the DetNet controller that the E2E routing information and the 5GS routing information newly match or do not match when discovering or identifying that the 5GS routing information newly match or do not match.
   C. When an incoming interface is specified, the TSCTSF may perform A and B, based on an outgoing interface and the incoming interface simultaneously. Here, in a case of routing from a UE to a UE, the TSCTSF may select two of an uplink (UL) PDU session identity (ID) and a downlink (DL) PDU session ID.
3. The UPF may transmit 5GS routing information to the TSCTSF whenever routing information is configured. The UPF may transmit a user plane node identifier (UID) to the TSCTSF through a user plane node management information container (UMIC), and may transmit a UPF port IP and/or an IP addr/prefix to the TSCTSF through a port management information container (PMIC). Alternatively, the UPF may transmit the UID or a UE IP (or IP addr/prefix) to the TSCTSF through the UMIC, and may transmit the UPF port IP and/or the IP addr/prefix to the TSCTSF through the PMIC. In addition to the IP addr/prefix, additional information, such as a prefix length, an interface type, or a MAC address, may be added.
4. A session management function (SMF) transmits 5GS routing information to the TSCTSF through a PCF whenever routing information is configured. The transmitted 5GS routing information may include a UE IP and/or an IP addr/prefix. In another example, the SMF may transmit the 5GS routing information to the TSCTSF through a UMIC or PMIC. In addition to the IP addr/prefix, additional information, such as a prefix length, an interface type, or a MAC address, may be added.

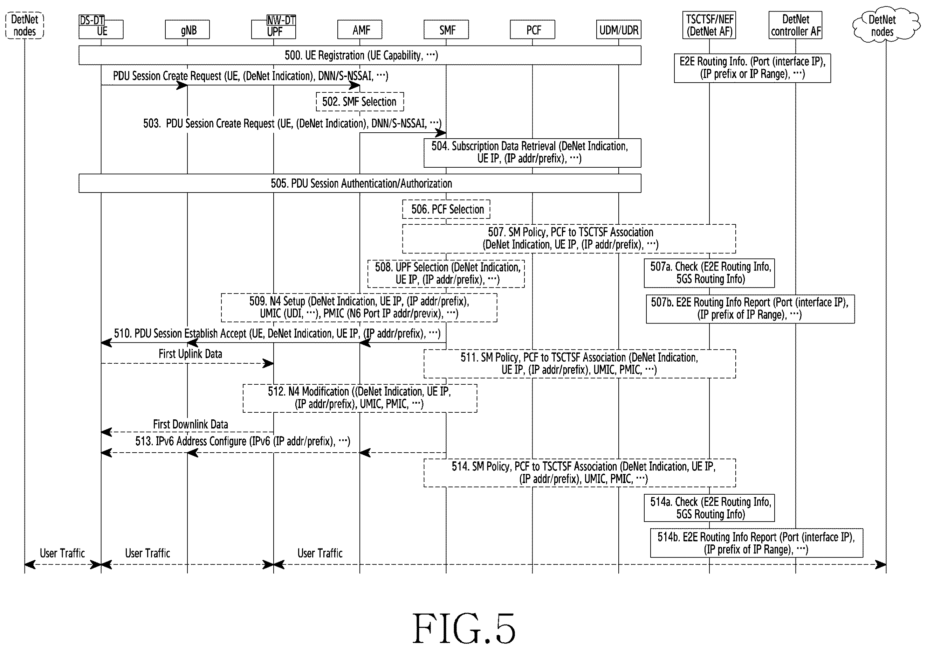

FIG. 5 illustrates a method for a SMF of a DetNet to transmit routing information of a UE to a TSCTSF and a method for deriving and utilizing routing information for a 5GS from E2E routing information when the 5GS interworks with the DetNet according to an embodiment.

Referring to FIG. 5, in operation 500, the UE (or terminal) may perform registration in the 5GS. A message (or information) for requesting the registration in the 5GS from the UE may include capability information indicating whether the UE is able to operate according to a request of the DetNet. In another example, the message (or information) for requesting the registration in the 5GS may include information on whether the UE is able to provide an interworking service according to a request of the DetNet in subscriber information on the UE.

According to an embodiment, in operation 500a, a DetNet controller or an external application function (AF) transmits end-to-end routing information to the 5GS. The transmitted end-to-end routing information may include a port (interface IP), an IP prefix, and/or an IP range. For example, the transmitted end-to-end routing information may include an IP, a port, and a destination IP prefix or range. Information corresponding to an outgoing port may be listed with respect to each outgoing port, but information corresponding to an incoming port may be listed with respect to each incoming port.

According to an embodiment, in operation 501, the UE may perform a PDU session establishment process with the 5GS. Here, a PDU session create request transmitted by the UE may include indication information indicating whether the UE is able to operate according to a request of the DetNet. The indication information may specifically indicate whether to perform routing information interworking, to perform only quality of service (QoS) interworking, or to perform both routing information interworking and QoS information interworking. For example, in routing information interworking, the indication information may include whether to perform a report to the DetNet only when there is a mismatch between DetNet routing information and 5GS routing information or to perform a report even when DetNet routing information and 5GS routing information match. For example, the indication information may indicate whether to support an update of 5GS routing information when there is a mismatch between DetNet routing information and the 5GS routing information. In addition, the indication information may include a DNN/S-NSSAI preset to support an operation according to a request of the DetNet.

According to an embodiment, in operation 502, an access and mobility management function (AMF) may select the SMF. Here, the SMF capable of supporting DetNet interworking may be selected based on a DetNet indication or the DNN/S-NSSAI included in a message of operation 501.

According to an embodiment, in operation 503, the AMF may transmit a PDU session establish request to the SMF. The PDU session establish request may include the DetNet indication, and may include the DNN/S-NSSAI preset to support the operation according to the request of the DetNet.

According to an embodiment, in operation 504, the SMF may identify and obtain or receive the subscriber information from a unified data management (UDM). The UDM may transmit the subscriber information including a preset UE IP address or prefix to the SMF by identifying the DetNet indication indicating whether the UE is able to operate according to the request of the DetNet (or based on the DetNet indication). Here, a UE IP may be the same as the IP address. Further, even though the DetNet indication is not included in a subscriber information request transmitted by the SMF, when the UE is configured to support the DetNet interworking service, the UDM may transmit a subscriber information response including the DetNet indication to the SMF.

According to an embodiment, the DetNet indication may specifically indicate whether to perform routing information interworking, to perform only QoS interworking, or to perform both routing information interworking and QoS information interworking. For example, in routing information interworking, the DetNet indication may include whether to perform a report to the DetNet only when there is a mismatch between DetNet routing information and 5GS routing information or to perform a report even when DetNet routing information and 5GS routing information match. For example, the DetNet indication may indicate whether to support an update of 5GS routing information when there is a mismatch between DetNet routing information and the 5GS routing information.

According to an embodiment, in operation 505, the UE and the SMF may perform authentication/authorization of a PDU session.

According to an embodiment, in operation 506, the SMF may select or determine a policy control function (PCF). For example, the SMF may select or determine a PCF capable of supporting DetNet interworking, based on the DetNet indication or the DNN/S-NSSAI.

According to an embodiment, in operation 507, the SMF may perform SM policy association with the PCF. For example, the PCF may perform association with the TSCTSF configured to support DetNet interworking. During the association with the TSCTSF, the DetNet indication, the UE IP, and/or IP addr/prefix information may be transmitted simultaneously. For example, the UE IP may be same as the IP address.

According to embodiment, in operation 507a, the TSCTSF may compare the E2E routing information of the DetNet with routing information of the 5GS to determine whether the pieces of information are aligned. For example, the TSCTF may compare the E2E routing information of the DetNet with the routing information of the 5GS to determine whether the pieces of the information match.

According to an embodiment, in operation 507b, when a mismatch is found between the E2E routing information of the DetNet and the routing information of the 5GS, the TSCTSF may report the mismatch between the pieces of information to the DetNet controller. Here, information reported to the DetNet controller may include the port (interface IP) and/or the IP prefix or IP range. In addition, even when the E2E routing information and the routing information of the 5GS are aligned or matched, the TSCTSF may report the alignment or match between the pieces of information to the DetNet controller, based on the DetNet indication. Alternatively, the TSCTSF may trigger a 5GS routing information update procedure based on the DetNet indication.

According to an embodiment, in operation 508, the SMF may select a UPF. The SMF may select or determine a UPF supporting DetNet interworking and the IP address range or prefix, based on the DetNet indication, the DNN/S-NSSAI, and the UE IP, and an ALCE may select or determine the UPF, based on the IP addr/prefix. For example, the UE IP may be the same as the IP address.

According to an embodiment, in operation 509, the SMF may perform an N4 setup with the UPF. The SMF may transmit the DetNet indication, the UE IP, and/or the destination IP addr/prefix to the UPF. The UPF may include information as a DetNet router including a user plane node ID (UID) as a DetNet node supporting the DetNet in a UMIC, and may include port information of an N6 side of the UPF in a PMIC to respond to the SMF.

According to an embodiment, in operation 510, the SMF may transmit a PDU session establish accept message to the UE via the AMF. The transmitted PDU session establish accept message may include the DetNet indication, the UE IP, and/or the IP addr/prefix. The UE may transmit first uplink data to the UPF. For example, the UE IP may be same as the IP address.

According to an embodiment, in operation 511, the SMF may perform SM policy association modification to the PCF. The PCF may perform association modification with the TSCTSF. During the association modification with the TSCTSF, information including the DetNet indication, the UE IP, the IP addr/prefix, the UMIC, and the PMIC may be transmitted to the TSCTSF. For example, the UE IP may be same as the IP address.

According to an embodiment, in operation 511a, the TSCTSF may compare the E2E routing information of the DetNet with the routing information of the 5GS to determine whether the pieces of information are aligned. For example, the TSCTSF may compare the E2E routing information of the DetNet with the routing information of the 5GS to identify or determine whether the pieces of information match.

According to an embodiment, in operation 511b, when a mismatch is found between the E2E routing information of the DetNet and the routing information of the 5GS, the TSCTSF may report the mismatch between the E2E routing information of the DetNet and the routing information of the 5GS to the DetNet controller. Information reported to the DetNet controller may include the port (interface IP), the IP prefix, or the IP Range. In addition, even when the E2E routing information and the routing information of the 5GS are aligned or matched, the TSCTSF may report the alignment or match between the pieces of information to the DetNet controller, based on the DetNet indication. In another example, the TSCTSF may trigger a 5GS routing information update procedure based on the DetNet indication.

According to an embodiment, after receiving the first uplink data from the UE, the UPF may complete tunnel configuration on a base station side of the UPF, and may report or transmit a completion result to the SMF in operation 512. The UPF may transmit the UMIC including the information as the DetNet router including the user plane node ID (UID) as the DetNet node supporting the DetNet and the PMIC including the port information of the N6 side of the UPF to the SMF. The UPF may transmit first downlink data to the UE, based on the completed configuration.

According to an embodiment, in operation 513, the SMF may perform IPv6 address configuration for the UE configured to IPv6 or IPv4v6 via the UPF. For example, an IPv6 address and prefix may be included.

According to an embodiment, in operation 514, the SMF may perform SM policy association modification to the PCF. The PCF may perform association modification with the TSCTSF. During the association modification with the TSCTSF, information transmitted to the TSCTSF may include the DetNet indication, the UE IP, the IP addr/prefix, and the UMIC and the PMIC that the SMF receives from the UPF in operation 512. For example, the UE IP may be same as the IP address.

According to an embodiment, in operation 514a, the TSCTSF compares the E2E routing information of the DetNet with the routing information of the 5GS to determine whether the pieces of information are aligned. For example, the TSCTSF may compare the E2E routing information of the DetNet with the routing information of the 5GS to identify or determine whether the pieces of information match.

According to an embodiment, in operation 514b, when a mismatch is found between the E2E routing information of the DetNet and the routing information of the 5GS, the TSCTSF may report the mismatch between the pieces of information to the DetNet controller. Reported information may include the port (interface IP) and/or the IP prefix or IP range. In another example, even when the E2E routing information and the routing information of the 5GS are aligned or matched, the TSCTSF may report the alignment or match between the pieces of information to the DetNet controller, based on the DetNet indication. In another example, the TSCTSF may trigger a 5GS routing information update procedure based on the DetNet indication.

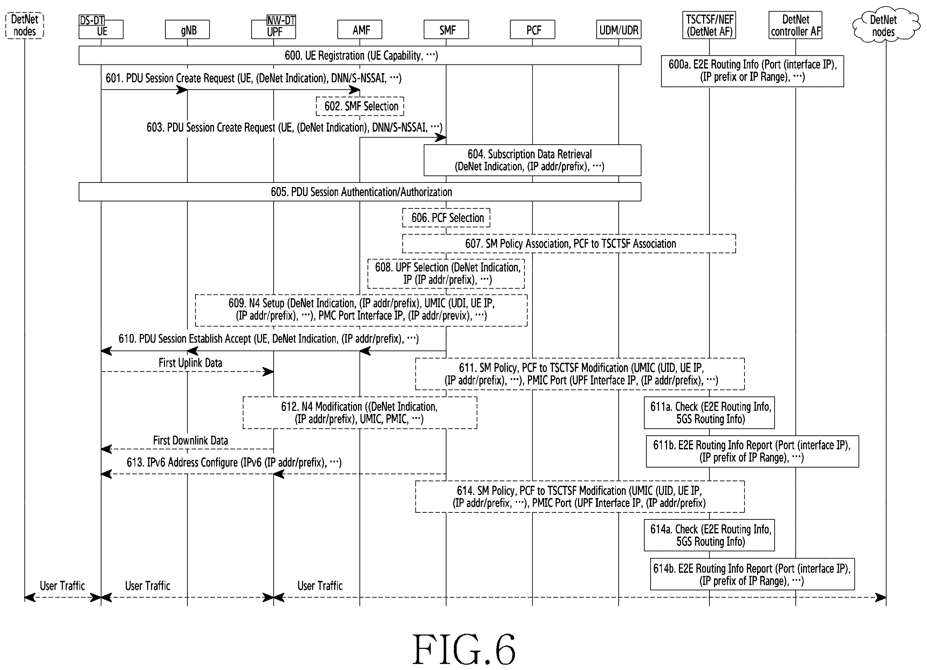

FIG. 6 illustrates a method for a UPF of a DetNet to transmit routing information of a UE to a TSCTSF and a method for deriving and utilizing routing information for a 5GS from E2E routing information when the 5GS interworks with the DetNet.

According to an embodiment, in operation 600, the UE may perform registration in the 5GS. For example, 5GS registration information (or message) transmitted by the UE may include capability information indicating whether the UE is able to operate according to a request of the DetNet. For example, the 5GS registration information (or message) transmitted by the UE may include information on whether the UE is able to provide an interworking service according to a request of the DetNet in subscriber information on the UE.

According to an embodiment, in operation 600a, a DetNet controller or an external AF transmits end-to-end routing information to the 5GS. For example, the end-to-end routing information may include a port (interface IP), an IP prefix, and/or an IP range. For example, the end-to-end routing information may include an IP, a port, and a destination IP prefix or range. Generally, information corresponding to an outgoing port is listed with respect to each outgoing port, but information corresponding to an incoming port may be listed with respect to each incoming port.

According to an embodiment, in operation 601, the UE may perform a PDU session establishment process with the 5GS. For example, a PDU session create request may include indication information indicating whether the UE is able to operate according to a request of the DetNet. For example, the PDU session create request may include a DNN/S-NSSAI preset to support an operation according to a request of the DetNet.

The indication information may specifically indicate whether to perform routing information interworking, to perform only QoS interworking, or to perform both routing information interworking and QoS information interworking. For example, in routing information interworking, the indication information may include whether to perform a report to the DetNet only when there is a mismatch between DetNet routing information and 5GS routing information or to perform a report even when DetNet routing information and 5GS routing information match. The indication information may indicate whether to support an update of 5GS routing information when there is a mismatch between DetNet routing information and the 5GS routing information.

According to an embodiment, in operation 602, an AMF may select or determine a SMF. The AMF may select a SMF capable of supporting DetNet interworking, based on a DetNet indication or the DNN/S-NSSAI included in a message of operation 601.

According to an embodiment, in operation 603, the AMF may transmit a PDU session establish request to the SMF. For example, the PDU session establish request may include the DetNet indication, and may include the DNN/S-NSSAI preset to support the operation according to the request of the DetNet.

According to an embodiment, in operation 604, the SMF may identify and obtain or receive the subscriber information from a UDM. The UDM may identify the DetNet indication indicating whether the UE is able to operate according to the request of the DetNet, and may transmit the subscriber information including a preset UE IP address or prefix to the SMF. For example, a UE IP may be the same as the IP address.

Further, even though the DetNet indication is not included in a subscriber information request transmitted by the SMF, when the UE is configured to support the DetNet interworking service, the UDM may transmit a subscriber information response including the DetNet indication to the SMF. For example, the DetNet indication may specifically indicate whether to perform routing information interworking, to perform only QoS interworking, or to perform both routing information interworking and QoS information interworking. For example, in routing information interworking, the DetNet indication may include whether to perform a report to the DetNet only when there is a mismatch between DetNet routing information and 5GS routing information. The DetNet indication may include whether to perform a report even when DetNet routing information and 5GS routing information match. The DetNet indication may indicate whether to support an update of 5GS routing information when there is a mismatch between DetNet routing information and the 5GS routing information.

According to an embodiment, in operation 605, the UE and the SMF may perform authentication/authorization of a PDU session.

According to an embodiment, in operation 606, the SMF may select or determine a PCF. For example, the SMF may select or determine a PCF capable of supporting DetNet interworking, based on the DetNet indication or the DNN/S-NSSAI.

According to an embodiment, in operation 607, the SMF may perform SM policy association with the PCF. Further, the PCF may perform association with the TSCTSF configured to support DetNet interworking.

According to an embodiment, in operation 608, the SMF may select or determine the UPF. For example, the SMF may select or determine a UPF supporting DetNet interworking and the IP address range or prefix, based on the DetNet indication, the DNN/S-NSSAI, and/or the IP addr/prefix.

According to an embodiment, in operation 609, the SMF may perform an N4 setup with the UPF. For example, the SMF may transmit the DetNet indication, the UE IP, and/or the destination IP addr/prefix. For example, the UPF may include information as a DetNet router including a user plane node ID (UID) as a DetNet node supporting the DetNet and/or information on a port on a UE side, such as the UE IP and the IP addr/prefix, in a UMIC. The UPF may include port information of an N6 side of the UPF in a PMIC to respond to the SMF.

According to an embodiment, in operation 610, the SMF may forward or transmit a PDU session establish accept message to the UE via the AMF. For example, the PDU session establish accept message may include the DetNet indication, the UE IP, and/or the IP addr/prefix. Subsequently, the UE may transmit first uplink data to the UPF. For example, the UE IP may be same as the IP address.

According to an embodiment, in operation 611, the SMF may perform SM policy association modification to the PCF. The PCF may perform association modification with the TSCTSF. During the association modification with the TSCTSF, the DetNet indication and the information as the DetNet router including the user plane node ID (UID) as the DetNet node supporting the DetNet and/or the information on the port on the UE side, such as the UE IP and the IP addr/prefix, that the SMF receives from the UPF in operation 609 may be included in a UMIC. The PCF may include the port information of the N6 side of the UPF in a PMIC.

According to an embodiment, in operation 611a, the TSCTSF compares the E2E routing information of the DetNet with the routing information of the 5GS to determine whether the pieces of information are aligned. For example, the TSCTSF may compare the E2E routing information of the DetNet with the routing information of the 5GS to identify or determine whether the pieces of information match.

According to an embodiment, in operation 611b, when a mismatch is found between the E2E routing information of the DetNet and the routing information of the 5GS, the TSCTSF may report the mismatch between the pieces of information to the DetNet controller. Reported information may include the port (interface IP), the IP prefix, or the IP Range. In another example, even when the E2E routing information and the routing information of the 5GS are aligned or matched, the TSCTSF may report the alignment or match between the pieces of information to the DetNet controller, based on the DetNet indication. In another example, the TSCTSF may trigger a 5GS routing information update procedure based on the DetNet indication.

According to an embodiment, after receiving the first uplink data from the UE, the UPF may complete tunnel configuration on a base station side of the UPF, and may report, forward, or transmit a completion result to the SMF in operation 612. The UPF may include including the information as the DetNet router including the user plane node ID (UID) as the DetNet node supporting the DetNet and/or the information on the port on the UE side, such as the UE IP and the IP addr/prefix, in the UMIC. The UPF may transmit the PMIC including the port information of the N6 side of the UPF to the SMF. The UPF may transmit first downlink data to the UE according to the completed configuration.

According to an embodiment, in operation 613, the SMF may perform IPv6 address configuration for the UE configured to IPv6 or IPv4v6 via the UPF. The IPv6 address configuration may include may include an IPv6 address and a prefix.

According to an embodiment, in operation 614, the SMF may perform SM policy association modification to the PCF. The PCF may perform association modification with the TSCTSF. During the association modification with the TSCTSF, the DetNet indication and the information as the DetNet router including the user plane node ID (UID) as the DetNet node supporting the DetNet and/or the information on the port on the UE side, such as the UE IP and the IP addr/prefix, that the SMF receives from the UPF in operation 612 may be included in a UMIC, and the port information of the N6 side of the UPF may be included in a PMIC.

According to an embodiment, in operation 614a, the TSCTSF compares the E2E routing information of the DetNet with the routing information of the 5GS to determine whether the pieces of information are aligned. For example, the TSCTSF may compare the E2E routing information of the DetNet with the routing information of the 5GS to identify or determine whether the pieces of information are aligned or matched.

According to an embodiment, in operation 614b, when a mismatch is found between the E2E routing information of the DetNet and the routing information of the 5GS, the TSCTSF may report the mismatch between the pieces of information to the DetNet controller. For example, reported information may include the port (interface IP) and/or the IP prefix or IP range. In another example, even when the E2E routing information and the routing information of the 5GS are aligned or matched, the TSCTSF may report the alignment or match between the pieces of information to the DetNet controller, based on the DetNet indication. In another example, the TSCTSF may trigger a 5GS routing information update procedure according to the DetNet indication.

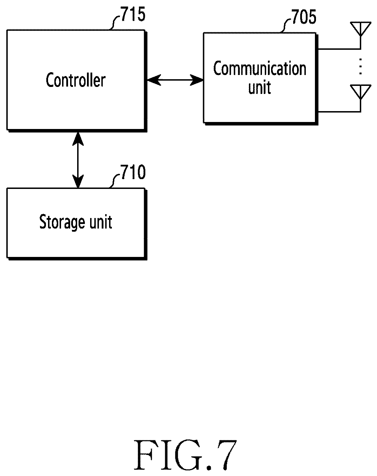

FIG. 7 illustrates an exemplary structure of a base station according to an embodiment of the disclosure.

Referring to FIG. 7, the structure according to an embodiment illustrated in FIG. 7 may be understood as a structure of the RAN in FIG. 1. As used herein, such terms as "... unit" and "... er" refer to a unit configured to process at least one function or operation, and may be implemented as hardware, software, or a combination of hardware and software.

According to an embodiment, the base station may include a communication unit 705, a storage unit 710, and/or a controller 715.

The communication unit 705 performs functions for transmitting/receiving signals through a radio channel. For example, the communication unit 705 performs functions of conversion between baseband signals and bitstrings according to the physical layer specifications of the system. For example, during data transmission, the communication unit 705 generates complex symbols by encoding and modulating a transmission bitstream. In addition, during data reception, the communication unit 705 demodulates and decodes a baseband signal to restore a received bitstring. In addition, the communication unit 705 up-converts a baseband signal to an RF band signal, transmits the same through an antenna, and down-converts an RF band signal received through the antenna to a baseband signal. For example, the communication unit 705 may include a transmission filter, a reception filter, an amplifier, a mixer, an oscillator, a DAC, and an ADC.

In addition, the communication unit 705 may include multiple transmission/reception paths. Moreover, the communication unit 705 may include at least one antenna array including multiple antenna elements. In terms of hardware, the communication unit 705 may include a digital circuit and an analog circuit (e.g., a radio frequency integrated circuit (RFIC)). The digital circuit and analog circuit may be implemented as a single package. In addition, the communication unit 705 may include multiple RF chains. Furthermore, the communication unit 705 may perform beamforming.

The communication unit 705 transmits and receives signals as described above. Accordingly, all or part of the communication unit 705 may be referred to as a "transmitter", a "receiver", or a "transceiver". In addition, as used in the following description, the meaning of "transmission and reception performed through a radio channel" includes the meaning that the above-described processing is performed by the communication unit 705.

The storage unit 710 may store basic programs, application programs, and data, such as configuration information, for operation of the main base station. The storage unit 710 may include a volatile memory, a non-volatile memory, or a combination of a volatile memory and a non-volatile memory. In addition, the storage unit 710 provides the stored data at the request of the controller 715.

The controller 715 controls the overall operation of the base station. For example, the controller 715 transmits/receives signals through the communication unit 705. In addition, the controller715 records data in the storage unit 710 and reads the data from the storage unit 710. In addition, the controller 715 may perform functions of protocol stacks required by communication specifications. To this end, the controller 715 may include at least one processor or microprocessor, or may be a part of a processor. In addition, a part of the communication unit 705 and the controller 715 may be referred to as a communication processor (CP). According to various embodiments, the controller 715 may control to perform synchronization by using a wireless communication network. For example, the controller 715 may control the base station to perform operations according to various embodiments described above.

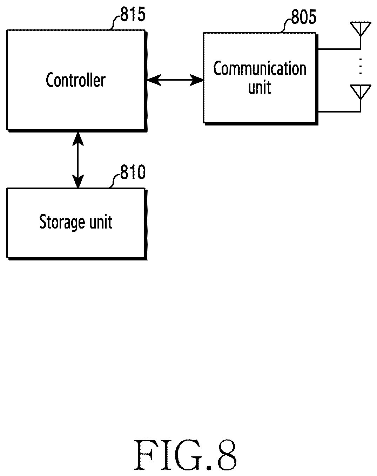

FIG. 8 illustrates an exemplary structure of a UE according to an embodiment of the disclosure. The structure illustrated in FIG. 8 may be understood as a structure of the UE in FIGS 5 and 6. As used herein, such terms as "... unit" and "... er" refer to a unit configured to process at least one function or operation, and may be implemented as hardware, software, or a combination of hardware and software.

Referring to FIG. 8, the UE may include a communication unit 805, a storage unit 810, and/or a controller 815.

The communication unit 805 performs functions for transmitting/receiving signals through a radio channel. For example, the communication unit 805 performs functions of conversion between baseband signals and bitstrings according to the physical layer specifications of the system. For example, during data transmission, the communication unit 805 generates complex symbols by encoding and modulating a transmission bitstream. In addition, during data reception, the communication unit 805 demodulates and decodes a baseband signal to restore a received bitstring. In addition, the communication unit 805 up-converts a baseband signal to an RF band signal, transmits the same through an antenna, and down-converts an RF band signal received through the antenna to a baseband signal. For example, the communication unit 805 may include a transmission filter, a reception filter, an amplifier, a mixer, an oscillator, a DAC, and an ADC.

In addition, the communication unit 805 may include multiple transmission/reception paths. Moreover, the communication unit 805 may include at least one antenna array including multiple antenna elements. In terms of hardware, the communication unit 805 may include a digital circuit and an analog circuit (e.g., a radio frequency integrated circuit (RFIC)). The digital circuit and analog circuit may be implemented as a single package. In addition, the communication unit 805 may include multiple RF chains. Furthermore, the communication unit 805 may perform beamforming.

The communication unit 805 transmits and receives signals as described above. Accordingly, all or part of the communication unit 805 may be referred to as a "transmitter", a "receiver", or a "transceiver". In addition, as used in the following description, the meaning of "transmission and reception performed through a radio channel" includes the meaning that the above-described processing is performed by the communication unit 805.

The storage unit 810 may store basic programs, application programs, and data, such as configuration information, for operation of the main base station. The storage unit 810 may include a volatile memory, a non-volatile memory, or a combination of a volatile memory and a non-volatile memory. In addition, the storage unit 810 provides the stored data at the request of the controller 815.

The controller 815 controls the overall operation of the UE. For example, the controller 815 transmits/receives signals through the communication unit 805. In addition, the controller 815 records data in the storage unit 810 and reads the data from the storage unit 810. In addition, the controller 815 may perform functions of protocol stacks required by communication specifications. To this end, the controller 815 may include at least one processor or microprocessor, or may be a part of a processor. In addition, a part of the communication unit 805 and the controller 815 may be referred to as a communication processor (CP). According to various embodiments, the controller 815 may control to perform synchronization by using a wireless communication network. For example, the controller 815 may control the UE to perform operations according to various embodiments described below.

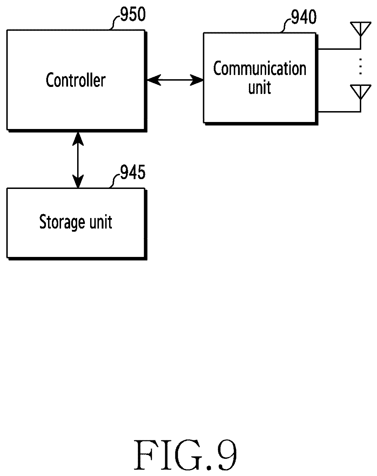

FIG. 9 illustrates a structure of a core network entity according to an embodiment of the disclosure. A structure of a core network entity in a wireless communication system according to various embodiments of the disclosure is illustrated. The structure illustrated in FIG. 9 may be understood as corresponding to at least one of the network entities in FIGS. 1 to 6. As used herein, such terms as "... unit" and "... er" refer to a unit configured to process at least one function or operation, and may be implemented as hardware, software, or a combination of hardware and software.

Referring to FIG. 9, the core network entity may include a communication unit 940, a storage unit 945, and a controller 950.

The communication unit 940 provides an interface for communicating with other devices in the network. That is, the communication unit 940 converts a bitstring, transmitted from the core network entity to any other device, into a physical signal, and converts a physical signal, received from any other device, into a bitstring. The communication unit 940 may transmit/receive signals. Accordingly, the communication unit 940 may be referred to as a modem, a transmitter, a receiver, or a transceiver. The communication unit 940 enables the core network entity to communicate with other devices or the system via a backhaul connection (e.g., wired backhaul or wireless backhaul) or via a network.

The storage unit 945 may store basic programs, application programs, and data, such as configuration information, for operation of the main base station. The storage unit 945 may include a volatile memory, a nonvolatile memory, or a combination of a volatile memory and a nonvolatile memory. In addition, the storage unit 945 provides the stored data at the request of the controller 950.

The controller 950 controls the overall operation of the core network entity. For example, the controller 950 transmits/receives signals through the communication unit 940. In addition, the controller 950 records data in the storage unit 945 and reads the data from the storage unit 945. To this end, the controller 950 may include at least one processor. According to various embodiments, the controller 950 may control to perform synchronization by using a wireless communication network. For example, the controller 950 may control the core network entity to perform operations according to various embodiments described below.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a time-sensitive communication and time synchronization function (TSCTSF) entity in a wireless communication system, the method comprising:
receiving internet protocol (IP) information on a user equipment (UE) from a session management function (SMF) entity;
receiving IP information on a user plane function (UPF) entity from the UPF entity;
receiving, from a deterministic network (DetNet) controller, end-to-end (E2E) routing-related information for routing of a fifth-generation system (5GS) comprising the TSCTSF entity; and
identifying information on a parameter for the routing of the 5GS, based on the E2E routing-related information,
wherein the routing of the 5GS is based on the IP information on the UE and the IP information on the UPF entity.

2. The method of claim 1, further comprising:
identifying a protocol data unit (PDU) session with the UE, based on the IP information on the UE and the IP information on the UPF entity.

3. The method of claim 1, wherein the IP information on the UE comprises at least one of information on an IP address of the UE or information on an IP prefix.

4. The method of claim 1, wherein the IP information on the UPF entity comprises first information included in a user plane node management information container (UMIC) and second information included in a port management information container (PMIC).

5. The method of claim 4, wherein the second information comprises at least one of information on an IP address of the UPF entity or information on an IP prefix.

6. The method of claim 1, wherein, in case that a UE-to-UE (U2U) connection is established through the routing of the 5GS, the E2E routing-related information is configured for each of an uplink protocol data unit (PDU) session and a downlink PDU session for the U2U connection.

7. The method of claim 1, further comprising:
comparing whether the IP information on the UE and the IP information on the UPF entity are in line with the E2E routing-related information; and
transmitting, to the DetNet controller, a report about whether the E2E routing-related information is accepted for the routing of the 5GS.

8. The method of claim 7, wherein whether the E2E routing-related information is accepted is based on whether the IP information on the UE and the IP information on the UPF entity are in line with the E2E routing-related information.

9. A time-sensitive communication and time synchronization function (TSCTSF) entity in a wireless communication system, the TSCTSF entity comprising:
a transceiver; and
a controller coupled with the transceiver,
wherein the controller is configured to:
receive internet protocol (IP) information on a user equipment (UE) from a session management function (SMF) entity;
receive IP information on a user plane function (UPF) entity from the UPF entity;
receive, from a deterministic network (DetNet) controller, end-to-end (E2E) routing-related information for routing of a fifth-generation system (5GS) comprising the TSCTSF entity; and
identify information on a parameter for the routing of the 5GS, based on the E2E routing-related information, and
the routing of the 5GS is based on the IP information on the UE and the IP information on the UPF entity.

10. The TSCTSF entity of claim 9, wherein the controller is configured to identify a protocol data unit (PDU) session with the UE, based on the IP information on the UE and the IP information on the UPF entity.

11. The TSCTSF entity of claim 9, wherein the IP information on the UE comprises at least one of information on an IP address of the UE or information on an IP prefix.

12. The TSCTSF entity of claim 9, wherein the IP information on the UPF entity comprises first information included in a user plane node management information container (UMIC) and second information included in a port management information container (PMIC).

13. The TSCTSF entity of claim 12, wherein the second information comprises at least one of information on an IP address of the UPF entity or information on an IP prefix.

14. The TSCTSF entity of claim 9, wherein, in case that a UE-to-UE (U2U) connection is established through the routing of the 5GS, the E2E routing-related information is configured for each of an uplink protocol data unit (PDU) session and a downlink PDU session for the U2U connection.

15. The TSCTSF entity of claim 9, wherein the controller is configured to:
compare whether the IP information on the UE and the IP information on the UPF entity are in line with the E2E routing-related information; and
transmit, to the DetNet controller, a report about whether the E2E routing-related information is accepted for the routing of the 5GS, and
wherein whether the E2E routing-related information is accepted is based on whether the IP information on the UE and the IP information on the UPF entity are in line with the E2E routing-related information.
